# EUROPÄISCHE PATENTSCHRIFT

(11) **EP 0 426 991 B1**
(45) Veröffentlichungstag und Bekanntmachung des Hinweises auf die Patenterteilung: **20.04.1994**
(21) Anmeldenummer: 90118840.9
(22) Anmeldetag: 02.10.1990
(51) Int. Cl.: C04B 35/64, F27B 9/00, F26B 3/00

(54) **Verfahren zum Trocknen und Brennen von Keramikteilen, zum Beispiel Sintern von Ferriten und dergleichen sowie Brennofen zur Verfahrensdurchführung**
Process for drying and sintering of ceramics, for example ferrites or similar, and furnace for this process
Procédé de séchage et de frittage de céramiques, par exemple de ferrites ou articles similaires, et four pour sa réalisation

(30) Priorität: 07.11.1989 DE 3937104
(43) Veröffentlichungstag der Anmeldung: 15.05.1991
(73) Patentinhaber: EISENMANN MASCHINENBAU KG (Komplementär: EISENMANN-Stiftung), D-71002 Böblingen (DE)
(72) Erfinder: Schwerer, Peter, W-7033 Herrenberg (DE)
(74) Vertreter: Seemann, Norbert W., Dipl.-Ing.

(56) Entgegenhaltungen:
- EP-A- 0 210 115
- BE-A- 484 478
- DE-A- 1 025 321
- FR-A- 1 549 927
- GB-A- 2 009 897
- GB-A- 2 195 010

## Beschreibung

Die Erfindung bezieht sich nach dem Oberbegriff des Patentanspruchs 1 auf ein Verfahren zum Trocknen und Brennen von Keramikteilen, z. B. Sintern von Ferriten u.dgl. sowie im weiteren auf die Ausgestaltung eines Brennofens mit spezieller Eignung zur Durchführung des anmeldegemäßen Verfahrens.

Bei bislang bekannten Verfahren findet das Trocknen beispielsweise der Ferrite in einem speziellen Trockner über einen Zeitraum von mehreren Stunden und bei Temperaturen leicht unterhalb 100° C statt und erst daran anschließend das eigentliche Sintern in einem sogenannten Rollenofen; je nach der Größe der so zu behandelnden Teile beträgt die Ofenzeit hierbei zwischen 6,5 bis 9 Stunden. Wird beim Sintern anstelle eines Rollenofens ein sogenannter Tunnelwagenofen verwendet, kann sich die Ofenzeit bis zu 24 Stunden verlängern.

Die Aufgabe der vorliegenden Erfindung besteht deshalb vor allem darin, in einem neuartigen Trocknungs- und Sinterverfahren die gesamte Ofenzeit für diese beiden Vorgänge auf etwa 1/3 der Zeit der bislang bekannten Brennverfahren, also ohne die zusätzliche Trocknung, zu verringern.

Gelöst wird diese Aufgabe durch die im Patentanspruch 1 angegebenen Verfahrensschritte in Verbindung mit den Vorrichtungsmerkmalen der Unteransprüche.

Die Erfindung ist zudem anhand einer Prinzipskizze eines sogenannten Rollenofens im folgenden im Detail näher erläutert; diese Skizze zeigt dabei einen derartigen Ofen in Seitenansicht.

Der dargestellte Ofen 2 besteht aus einem Gehäuse 2a mit Sockel 10, das Gehäuse 2a durchlaufender, angetriebener sowie auf einem Gestell 6 abgestützter Rollenbahn 3 samt Auflagen 4 für die zu brennenden Werkstücke 5.

Gemäß der Erfindung ist hierbei nun vorgesehen, daß die die Wärmestrahlung erzeugenden Heizelemente 9 unterhalb der auf der Rollenbahn 3 aufliegenden Trägertabletts 4 für die Werkstücke 5 angeordnet sind und der Ofen 2 bzw. das Ofengehäuse 2a mit einer speicherarmen Wärmeisolierung 8 sowie gas- oder elektrisch betriebenen Heizelementen 9 versehen ist. Diese indirekte Heizelementenanordnung und speicherarme Wärmeisolierung bewirken dabei vor allem, daß einerseits die Oberfläche der zu brennenden Teile 5 während der gesamten Trocknungsphase " offenporig " bleibt und somit alle Feuchtigkeit aus dem Inneren ungehindert austreten läßt und zum anderen, daß infolge der speicherarmen Isolierung eine prozeßverkürzende, schnellere Aufheizung des ein gemeinsames System darstellenden Brenn- und Trocknungsraumes stattfindet.

Mit einem Rollenofen der zuvorbeschriebenen Art lassen sich dabei folgende neue und vorteilhafte Verfahrensabläufe durchführen:
a. Trocknen und Sintern finden in ein und demselben (Rollen-)Ofen 2 statt.
b. Zur Trocknung dient diffuse Wärmestrahlung bei einer Umgebungstemperatur von ca. 250° C.
c. Im Ofen 2 werden nur extrem niedrige Frisch- und Abluftmengen mit extrem niedriger Luftgeschwindigkeit durchgesetzt.
d. Die zu behandelnden Werkstücke 5 sind mit gegenseitigem Abstand zueinander angeordnet.

Bei der durch diese Verfahren erstmals möglichen, arbeitszeitverkürzenden Hochtemperatur-Schocktrocknung bildet sich also zu Prozeßbeginn, d. h. bei der Trocknung nicht nur eine Art Dampfhülle um die jeweiligen Werkstücke herum, sondern die Anordnung der jeweiligen Werkstücke 5 mit allseits gegenseitigem Abstand zueinander anstelle der bislang üblichen Stapelung bewirkt zudem eine weitere Zeitverkürzung beim Trocknen und Brennen, weil dadurch praktisch alle Flächen des Werkstücks 5 der diffusen Wärmestrahlung gleichmäßig ausgesetzt sind.

### Bezugsziffernverzeichnis

- 1: Bodenfläche
- 2: Brennofen
- 2a: Gehäuse
- 3: Rollenbahn
- 4: Werkstückauflage
- 5: Werkstücke
- 6: Gestell
- 7: Frischluft-/Abluftgebläse
- 8: Isolierung
- 9: Heizelemente
- 10: Sockel

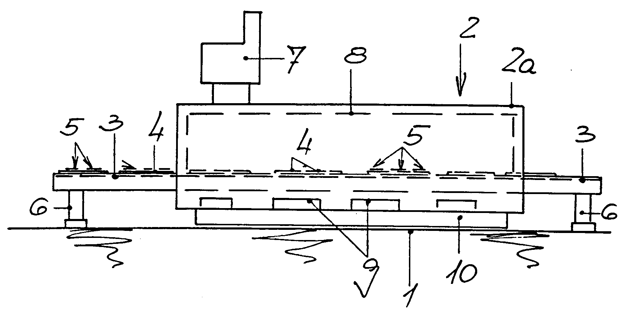

## Patentansprüche

1. Verfahren zum Trocknen und Brennen von Keramikteilen, z.B. Sintern von Ferriten u. dgl., bei dem die Keramikteile mit gegenseitigem Abstand zueinander auf einer Transporteinrichtung befördert werden,
**gekennzeichnet durch**
die Kombination folgender Merkmale:
a. Trocknen und Sintern finden in ein und demselben Ofenraum (2) statt.
b. Zur Trocknung dient diffuse Wärmestrahlung bei einer Umgebungstemperatur von ca. 250°C.
c. Im Ofen (2) werden nur extrem niedrige Frisch- und Abluftmengen mit extrem niedriger Luftgeschwindigkeit durchgesetzt.

2. Verfahren nach Anspruch 1,
**dadurch gekennzeichnet,**
daß Trocknen und Sintern mit indirekter, also nicht unmittelbar auf die Werkstücke gerichteter Wärmestrahlung stattfindet.

3. Trocken- und Brennofen zur Durchführung des Verfahrens nach Anspruch 1 oder 2,
**gekennzeichnet durch**
einen Ofen (2), der aus einem auf einen Sockel (10) aufsitzenden und mit diesem verbundenem Gehäuse (2a) sowie einer auf einem Gestell (6) abgestützter Rollenbahn (3) samt Auflagen (4) für die zu brennenden Werkstücke (5) besteht, wobei die die Trocknungs- und Sintertemperatur erzeugenden Heizelemente (9) nur unterhalb der auf der Rollenbahn aufliegenden Trägertabletts (4) für die Werkstücke (5) angeordnet sind.

4. Rollen ofen nach Anspruch 3,
**dadurch gekennzeichnet,**
daß der Ofen ( 2 ) mit einer speicherarmen Wärmeisolierung ( 8 ) sowie gas- oder elektrisch betriebenen Heizelementen ( 9 ) versehen ist.

## Claims

1. Process for the drying and sintering of ceramic articles, for example sintering of ferrites or the like, in which the ceramic articles are conveyed at a mutual spacing relative to one another on a conveying device, characterised by the combination of the following features:
a. Drying and sintering take place in one and the same furnace chamber (2).
b. Diffused heat radiation at an ambient temperature of about 250°C serves for the drying.
c. Only extremely small fresh air and spent air quantities, at extremely low air speed, are infiltrated into the oven (2).

2. Process according to claim 1, characterised thereby that the drying and sintering takes place with heat radiation, thus not directed directly onto the workpieces.

3. Drying and sintering furnace for carrying out the process according to claim 1 or 2, characterised by a furnace (2), which consists of a housing (2a) seated on and connected to a foundation (10) as well as a roller conveyor (3) supported on a frame (6) and with supports (4) for the workpieces (5) to be sintered, wherein the heating elements (9) generating the drying and sintering temperature arranged only below the carrier trays (4), which rest on the roller conveyor, for the workpieces (5).

4. Roller furnace according to claim 3, characterised thereby that the furnace (2) is provided with a low-storage thermal insulation (8) as well as gas-powered or electrically powered heating elements (9).

## Revendications

1. Procédé de séchage et de cuisson de pièces en matériau céramique, par exemple de frittage de ferrites et similaires, selon lequel les pièces en céramique sont transportées à distance mutuelle sur un transporteur, **caractérisé** par la combinaison des caractéristiques suivantes :
a. le séchage et le frittage s'effectuent dans une seule et même chambre de four (2)
b. on utilise pour le séchage le rayonnement thermique diffus à une température ambiante d'environ 250°C
c. seules des quantités extrêmement faibles d'air frais et d'air d'échappement traversent le four (2), avec une vitesse de l'air extrêmement faible.

2. Procédé selon la revendication 1, **caractérisé** en ce que le séchage et le frittage s'effectuent avec un rayonnement thermique indirect, c'est-à-dire non directement dirigé sur les pièces à traiter.

3. Four de séchage et de cuisson pour la mise en oeuvre du procédé selon la revendication 1 ou 2, **caractérisé** par un four (2), qui est constitué d'une carcasse (2a) reposant sur un socle (10) et assemblée à ce dernier, ainsi que d'un transporteur à rouleaux (3) s'appuyant sur un bâti (6) et présentant des supports (4) pour les pièces (5) à cuire, les éléments chauffants (9) produisant la température de séchage et de frittage étant uniquement disposés en dessous des tablettes de support (4) pour les pièces (5), tablettes qui sont posées sur le transporteur à rouleaux.

4. Four à rouleaux selon la revendication 3, **caractérisé** en ce que le four (2) est pourvu d'une isolation thermique (8) à faible accumulation, ainsi que d'éléments chauffants (9) fonctionnant au gaz ou à l'électricité.
